# EUROPÄISCHE PATENTANMELDUNG

(11) **EP 3 971 446 A1**
(43) Veröffentlichungstag der Anmeldung: **23.03.2022**
(21) Anmeldenummer: 20196456.6
(22) Anmeldetag: 16.09.2020
(51) Int. Cl.: F16H 1/28, F03D 15/00, F16H 57/021, F03D 80/70, H02K 7/116

(54) **GENERATORBETRIEBE, ANTRIEBSSTRANG, WINDKRAFTANLAGE UND COMPUTERPROGRAMMPRODUKT**

(71) Anmelder: Siemens Aktiengesellschaft, 80333 München (DE); Flender GmbH, 46395 Bocholt (DE)
(72) Erfinder: Gettler, Ralf, 46325 Borken (DE); Winkler, Günther, 4785 Haibach (AT)
(74) Vertreter: Maier, Daniel Oliver

(57) **Zusammenfassung**

Die Erfindung betrifft ein Generatorgetriebe (10), das eine Generatoreinheit (30) und eine Getriebeeinheit (20) umfasst. Die Getriebeeinheit weist eine Planetenstufe (21,22,23) mit einer Sonnenwelle (40) auf, die mit einem Rotor (32) der Generatoreinheit (30) verbunden ist. Erfindungsgemäße ist die Sonnenwelle (40) unmittelbar mit dem Rotor (32) verbunden. Die Erfindung betrifft ebenso einen Antriebsstrang (75) für eine Windkraftanlage (70) mit einem korrespondierenden Generatorgetriebe (10). Ferner betrifft die Erfindung eine Windkraftanlage (70), die mit einem solchen Antriebsstrang ausgestattet ist und ein Computerprogrammprodukt (60), das zum Simulieren eines Betriebsverhaltens einer Sonnenwelle (40) in einem derartigen Generatorgetriebe (10) ausgebildet ist.

## Beschreibung

Die Erfindung betrifft ein Generatorgetriebe, das für den Einsatz in einer Windkraftanlage geeignet ausgebildet ist. Ebenso betrifft die Erfindung einen Antriebsstrang, der ein solches Generatorgetriebe aufweist. Die Erfindung betrifft auch eine Windkraftanlage, die mit einem derartigen Antriebsstrang ausgestattet ist. Des Weiteren betrifft die Erfindung ein Computerprogrammprodukt, das zu einem Simulieren eines Betriebsverhaltens einer Sonnenwelle eines korrespondierenden Generatorgetriebes geeignet ist.

Aus der EP 2 541 058 A1 ist ein Antriebssystem für eine Windkraftanlage bekannt, das ein Getriebe mit zwei Planetenstufen und einen Generator aufweist. Das Antriebssystem weist in einer Getriebeeinheit eine Abtriebswelle auf, durch die eine Verbindung zum Generator hergestellt wird. Die Abtriebswelle ist dazu an ihrem generatorseitigen Ende von einer Rotorhohlwelle umgeben, in der eine Kupplung angeordnet ist.

Die Patentschrift US 8 629 591 B2 offenbart ein Generatorgetriebe mit zwei Planetenstufen, die mit einem Generator verbunden sind. Eine Sonnenwelle der letzten Planetenstufe ist mit einer gekrümmten Verzahnung versehen, die mit einer korrespondierenden gekrümmten Verzahnung einer Rotorwelle gekoppelt ist. Die Rotorwelle wiederum ist an ihrer Stirnseite mit dem Rotor selbst verbunden.

An Generatorgetriebe, die in Windkraftanlagen einsetzbar sind, werden steigende Anforderungen in puncto Leistungsfähigkeit und Wirtschaftlichkeit gestellt. Dazu gehört auch, dass eine einfache Herstellbarkeit gegeben ist und hohe Zuverlässigkeit des Generatorgetriebes gewährleistet ist. Der Erfindung liegt die Aufgabe zugrunde, ein Generatorgetriebe bereitzustellen, dass in zumindest einer der beschriebenen Punkte eine Verbesserung bietet.

Die Aufgabenstellung wird durch ein erfindungsgemäßes Generatorgetriebe gelöst, das eine Getriebeeinheit und eine Generatoreinheit aufweist und zur Verwendung in einer Windkraftanlage geeignet ausgebildet ist. Die Getriebeeinheit umfasst eine Planetenstufe, von der eine vorliegende Antriebsleistung an die Generatoreinheit übertragen wird. Die Planetenstufe weist eine Sonnenwelle auf, über die die Antriebsleistung aus der Planetenstufe der Getriebeeinheit auf die Generatoreinheit übertragen wird. Dazu ist die Sonnenwelle drehmomentübertragend mit einem Rotor der Generatoreinheit verbunden. Erfindungsgemäß ist die Sonnenwelle unmittelbar mit dem Rotor verbunden ausgebildet. Dementsprechend sind die Sonnenwelle und der Rotor kupplungsfrei drehfest miteinander verbunden. Versätze der Sonnenwelle, beispielsweis ein Axialrichtung, Radialrichtung und/oder einer Kipprichtung wirken sich dementsprechend auf den Rotor aus und werden nicht ausgeglichen. Ein Drehmoment, das über die Sonnenwelle aus der Planetenstufe herausgeführt wird, wird so im Wesentlichen unmittelbar auf den Rotor der Generatoreinheit übertragen. Gegenüber Lösungen aus dem Stand der Technik werden somit hoch beanspruchte Schnittstellen zur Übertragung von Drehmoment, beispielsweise Kurzverzahnungen oder Bogenverzahnungen, vermieden. Hoch beanspruchte Schnittstellen sind in bekannten Lösungen typischerweise maßgeblich für die Dimensionierung und Auslegung der zughörigen Komponenten. Die Sonnenwelle ist dahingehend ausbildbar, auftretende Versätze durch ihr Verformungsverhalten, insbesondere ihr Biegeverhalten, auszugleichen. Ferner weist das erfindungsgemäße Generatorgetriebe eine reduzierte Bauteilanzahl auf, was eine schnelle und kosteneffiziente Montage erlaubt.

In einer Ausführungsform des beanspruchten Generatorgetriebes umfasst der Rotor eine Rotorscheibe, an der Rotorblechpakete angebracht sind. Die Rotorscheibe kann sich im Wesentlichen radial erstrecken oder zumindest teilweise trichterförmig ausgebildet sein. Durch die Rotorscheibe wird eine Drehbewegung der Sonnenwelle unmittelbar auf die Rotorblechpakete übertragen. Infolgedessen ist im Betrieb die Drehzahl der Sonnenwelle identisch einer Drehzahl des Rotors, der Rotorscheibe und der Rotorblechpakete. Dadurch wird ist die Antriebsleistung, die dem Generatorgetriebe zugeführt wird, unter Berücksichtigung von mechanischen Verlusten in der Getriebeeinheit und elektrischen Verlusten in der Generatoreinheit, in Elektrizität umwandelbar. Die Rotorscheibe kann auch Ausnehmungen aufweisen und einen speichenradartigen Aufbau aufweisen.

Darüber hinaus kann die Sonnenwelle in einem generatorseitigen Abschnitt in Lagern drehbar aufgenommen sein. Die Lager wiederum sind in einem generatorseitigen Gehäuseabschnitt aufgenommen, der zu einem Gehäuse der Generatoreinheit gehören kann. Die Sonnenwelle kann infolgedessen an ihrem getriebeseitigen Ende lediglich durch die Planetenstufe geführt, also gelagert, sein. Ein weiter getriebeseitig liegendes Lager ist dadurch entbehrlich. Die Lager am generatorseitigen Abschnitt der Sonnenwelle sind bei der Montage des der Generatoreinheit gut zugänglich und dementsprechend einfach einstellbar. Die Sonnenwelle ist dadurch schnell und präzise auf einen angestrebten zentrischen Lauf des Rotors hin ausgerichtet montierbar. Der Erfindung liegt unter anderem die Erkenntnis zugrunde, dass eine Toleranz in der Lage der Sonnenwelle, bezogen auf die Planetenräder der Planetenstufe, durch ein Biegeverhalten der Sonnenwelle in der Planetenstufe ausgleichbar ist. Dadurch ist in einfacher Weise eine leistungsfähige und zuverlässige Übertragung von Antriebsleistung auf die Sonnenwelle gewährleistet.

In einer weiteren Ausführungsform des beanspruchten Generatorgetriebes ist der generatorseitige Gehäuseabschnitt, in dem die Lager für die Sonnenwelle angeordnet sind, als verjüngter Gehäuseabschnitt ausgebildet. Der Gehäuseabschnitt weist einen geringeren Außendurchmesser auf als ein Gehäuse der Getriebeeinheit. Das Gehäuse der Generatoreinheit weist dadurch eine im Wesentlichen umlaufende U-Form oder J-Form auf, die eine erhöhte Steifigkeit bietet. Infolgedessen ist eine generatorseitige, als endseitige, Verschlusswandung an der Generatoreinheit selbst entbehrlich. Weiter sind dadurch Lagerströme vermeidbar. Insbesondere wird ein elektrisch leitender Kreis durch einen Lagerschilde oder eine geschlossene Bauweise eines Generatorgehäuses vermieden, weil die umlaufende U-Form bzw. J-Form offen ist. Ebenso wird dadurch die Zugänglichkeit im Inneren der Generatoreinheit und der Getriebeeinheit verbessert. Die Generatoreinheit ist dadurch ferner beispielsweise in einer aufgerichteten Position anhebbar, ohne dass deren Eigengewicht zu einem Verzug führt, durch den ein Luftspalt in der Generatoreinheit beeinträchtigt wird. Die Handhabung der Generatoreinheit wird dadurch vereinfacht, was eine beschleunigte Montage ermöglicht.

Des Weiteren kann der generatorseitige Gehäuseabschnitt dazu ausgebildet sein, Reaktionskräfte aufzunehmen, die die einen Versatz der Sonnenwelle in der Planetenstufe hervorgerufen wird. Der generatorseitige Gehäuseabschnitt kann aufgrund seiner verjüngten Form eine erhöhte Wandstärke aufweisen, die ein Aufnehmen solcher Reaktionskräfte erlaubt. Insbesondere ist der generatorseitige Gehäuseabschnitt dazu geeignet, Biegebeanspruchungen und Axialbeanspruchungen aufzunehmen. Dadurch ist die Sonnenwelle an ihrem generatorseitigen Ende präzise führbar.

Ferner kann die Sonnenwelle im beanspruchten Generatorgetriebe in einem getriebeseitigen Abschnitt ihre minimale Biegesteifigkeit aufweisen. Unter dem getriebeseitigen Abschnitt ist im Wesentlichen eine dem Getriebe zugewandte Hälfte der Sonnenwelle zu verstehen. Die Sonnenwelle kann ihre minimale Biegesteifigkeit, beispielsweise in Form ihres minimalen Außendurchmessers, in einem Abschnitt zwischen dem Sonnenrad der Planetenstufe und einem der Lager positioniert ist. Dementsprechend ist die Sonnenwelle dazu geeignet, einwirkende Beanspruchungen durch eine Biegung des getriebeseitigen Abschnitts mit der minimalen Biegesteifigkeit auszugleichen.

Durch Verwendung eines hinreichend zähen Werkstoffs kann so eine belastbare und langlebige Ausgleichsvorrichtung durch die Sonnenwelle selbst bereitgestellt werden. Die Anzahl an Bauteilen im Generatorgetriebe wird so weiter reduziert, was eine einfache und schnelle Montage erlaubt.

In einer weiteren Ausführungsform des beanspruchten Generatorgetriebes kann der Rotor vollständig in den Lagern im generatorseitigen Gehäuseabschnitt gelagert sein. Durch die vollständige Lagerung des Rotors in den Lagern im generatorseitigen Gehäuseabschnitt werden sämtliche auf den Rotor einwirkenden Kräfte und Drehmomente aufgenommen. Insbesondere sind zusätzliche Lager für die Sonnenwelle, beispielsweise in einer Wandung eines Generatorgehäuses, entbehrlich. Auch dadurch wird die Herstellung des beanspruchten Generatorgetriebes weiter beschleunigt. Durch die Einsparung an zusätzlichen Lagern wird auch die Zuverlässigkeit des Generatorgetriebes gesteigert.

Des Weiteren können die Lager, in denen die Sonnenwelle aufgenommen ist, zueinander beabstandet, beispielsweise in eine Axialrichtung, angeordnet sein. Durch die beabstandete Anordnung der Lager sind diese dazu geeignet, eine Biegebeanspruchung der Sonnenwelle aufzunehmen. Insbesondere wird so ein Verkippen des Rotors in der Generatoreinheit reduziert oder vermieden. Beispielsweise können die Lager als Radiallager ausgebildet sein. Darüber hinaus können die Lager in entgegengesetzten Bereichen des generatorseitigen Gehäuseabschnitts angeordnet sein. Je weiter die Lager der Sonnenwelle zueinander beabstandet sind, umso besser kann die Verkippung des Rotors reduziert werden.

Ferner können die Lager, in denen die Sonnenwelle aufgenommen ist, jeweils als Wälzlager oder Gleitlager ausgebildet sein. Wälzlager sind modular, bieten so eine einfache Montage und sind in einer Vielzahl an Varianten verfügbar. Gleitlager wiederum bieten eine hohe Beanspruchbarkeit und hohe Lebensdauer. Insbesondere können die Lager als Wälzlager ausgebildet sein, die in einer X-Anordnung, einer O-Anordnung oder einer Fest-Los-Lageranordnung.

In einer weiteren Ausführungsform des beanspruchten Generatorgetriebes kann die Sonnenwelle über ein Kurzverzahnung verfügen. Die Kurzverzahnung ermöglicht es, ein Sonnenrad der Planetenstufe drehfest an der Sonnenwelle anzuordnen. Alternativ können die Sonnenwelle und das Sonnenrad einstückig ausgebildet sein. Eine Kurzverzahnung erlaubt es, die Planetenstufe und die Sonnenwelle am generatorseitigen Gehäuseabschnitt separat zu fertigen und lediglich bei der der Montage zusammenzusetzen. Dadurch wird ein erhöhter Grad an Arbeitsteilung erreicht, was eine schnellere und kosteneffizientere Herstellung ermöglicht. Eine Sonnenwelle, die einstückig mit dem Sonnenrad ausgebildet ist, wiederum erlaubt es die Bauteilanzahl weiter zu reduzieren.

Im beanspruchten Generatorgetriebe kann die Getriebeeinheit drei hintereinandergeschaltete Planetenstufen aufweisen. Unter hintereinandergeschaltet ist zu verstehen, dass die Antriebsleistung in einer Planetenstufe von einer Antriebswelle vollständig auf eine Abtriebswelle übertragen wird, die wiederum als Antriebswelle einer benachbarten Planetenstufe dient. Die drei hintereinandergeschalteten Planetenstufen bilden somit kein Koppelgetriebe. Derartige Getriebe mit drei Planetenstufen ist beispielsweise in WO 2020/001942 A1 offenbart. Der Offenbarungsgehalt von WO 2020/001942 A1 wird durch Verweisung in die vorliegende Anmeldung mit einbezogen. Das beanspruchte Generatorgetriebe mit drei Planetenstufen bietet eine zuverlässige und kompakte Möglichkeit, eine Drehzahl zu wandeln. Durch die kompakte Bauweise der Sonnenwelle und ihre Verbindung mit dem Rotor werden diese Vorteile auch auf Generatorgetriebe übertragen. Derartige Generatorgetriebe bieten gegenüber Lösungen aus dem Stand der Technik eine gesteigerte Übersetzung, und damit auch eine verringerte Generatordrehzahl. Des Weiteren ist bei einem dreistufigen Planetengetriebe die antriebsseitige Planetenstufe im Durchmesser reduzierbar, was wiederum eine kosteneffiziente Herstellung erlaubt.

Hierdurch wiederum wird auch der Transport des Generatorgetriebes vereinfacht.

Des Weiteren kann der Rotor mittels eines Spannsatzes mit der Sonnenwelle verbunden sein. Ein Spannsatz weist zumindest eine Komponente mit einer Keilform auf, durch die bei einem Anziehen des Spannsatzes auch eine Zentrierung erfolgt. Der Rotor ist demnach mittels des Spannsatzes präzise und schnell auf der Sonnenwelle zentrierbar und befestigbar. Spannsätze sind in puncto Größe und Beanspruchbarkeit anpassbar. Der Spannsatz kann von der Generatorseite her angebracht werden und ist einfach inspizierbar und nachziehbar, also wartungsfreundlich. Spannsätze sind dazu geeignet, zwischen den verspannten Komponenten hohe Beanspruchungen in Tangentialrichtung zu übertragen. Hierdurch wird eine zuverlässige Übertragung der Drehung der Sonnenwelle auf den Rotor gewährleistet. Alternativ kann der Rotor auch über eine Flanschverbindung, oder einen Kegelschrumpfsitz, oder andere Welle-Nabe-Verbindungen, insbesondere kraftschlüssige und formschlüssige Welle-Nabe-Verbindungen mit der Generatorwelle verbunden sein.

Die zugrundeliegende Aufgabenstellung wird auch durch einen erfindungsgemäßen Antriebsstrang gelöst. Der Antriebsstrang ist zum Einsatz in einer Windkraftanlage ausgebildet und umfasst eine Hauptwelle, die mit einem Mehrblattrotor der Windkraftanlage drehmomentübertragend verbindbar ist. Durch die Hauptwelle wird eine Antriebsleistung zur Verfügung gestellt, die an ein Generatorgetriebe transportiert wird. Dazu ist die Hauptwelle drehmomentübertragend mit dem Generatorgetriebe verbunden. Erfindungsgemäß ist das Generatorgetriebe nach einem der oben skizzierten Ausführungsformen ausgebildet. Der erfindungsgemäße Antriebsstrang bietet ein hohes Maß an Leistung bei der Gewinnung von Elektrizität und ist gleichzeitig kompakt. Der Antriebsstrang ist auch relativ leicht, so dass eine Montage beim Bau der entsprechenden Windkraftanlage einfach durchführbar ist. Insbesondere kommt der erfindungsgemäße Antriebsstrang, bezogen auf seine Leistungsfähigkeit, mit geringer Hebeleistung von Kränen aus.

Ebenso wird die Aufgabe durch eine erfindungsgemäße Windkraftanlage gelöst. Die Windkraftanlage umfasst eine Gondel, an der drehbar ein Mehrblattrotor angeordnet ist. Der Mehrblattrotor ist mit einer Hauptwelle drehmomentübertragend verbunden, so dass eine Drehung des Mehrblattrotors auf die Hauptwelle übertragen wird. Die Hauptwelle gehört zu einem Antriebsstrang, der gemäß einer der oben beschriebenen Ausführungsformen ausgebildet ist.

Gleichermaßen wird die zugrundeliegende Aufgabenstellung durch ein erfindungsgemäßes Computerprogrammprodukt gelöst, das dazu ausgebildet ist, ein Betriebsverhalten einer Sonnenwelle in einem Generatorgetriebe zu simulieren. Dazu umfasst das Computerprogrammprodukt eine Abbildung der Sonnenwelle in ihren Abmessungen, ihrem Material und/oder ihren Oberflächenbeschaffenheiten. Das Computerprogrammprodukt kann auch ein Physik-Modell umfassen, durch das die Kinematik, ein Verformungsverhalten, ein thermisches Verhalten, ein Schwingungsverhalten, ein Verschleißverhalten und/oder ein Materialermüdungsverhalten nachbildbar ist. Das Computerprogrammprodukt kann eine Datenschnittstelle aufweisen, durch die Daten über einen vorliegenden Betriebszustand, beispielweise Drehzahl der Sonnenwelle und das vorliegende Drehmoment, eine Umgebungstemperatur und/oder eine Schwingungsanregung der Welle als Eingabedaten bereitstellbar sind. Das Computerprogramprodukt kann auch über eine Datenschnittstelle verfügen, die zu einem Ausgeben von Simulationsresultaten geeignet ist. Die Simulationsergebnisse sind darüber an einen Benutzer und/oder andere simulationsgerichtete Computerprogrammprodukte ausgebbar. Darüber hinaus kann das Computerprogrammprodukt als sogenannter Digitaler Zwilling genannt, ausgebildet sein. Ein derartiger Digitaler Zwilling ist beispielsweise aus der Offenlegungsschrift US 2017/286572 A1 bekannt. Der Offenbarungsgehalt von US 2017/286572 A1 wird durch Verweisung in die vorliegende Anmeldung mit einbezogen.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine Ausführungsform des beanspruchten Generatorgetriebes in einem Längsschnitt;
- FIG 2: schematisch eine Detailansicht der Ausführungsform des beanspruchten Generatorgetriebes nach FIG 1;
- FIG 3: eine geschnittene Schrägansicht einer Ausführungsform der beanspruchten Windkraftanlage.

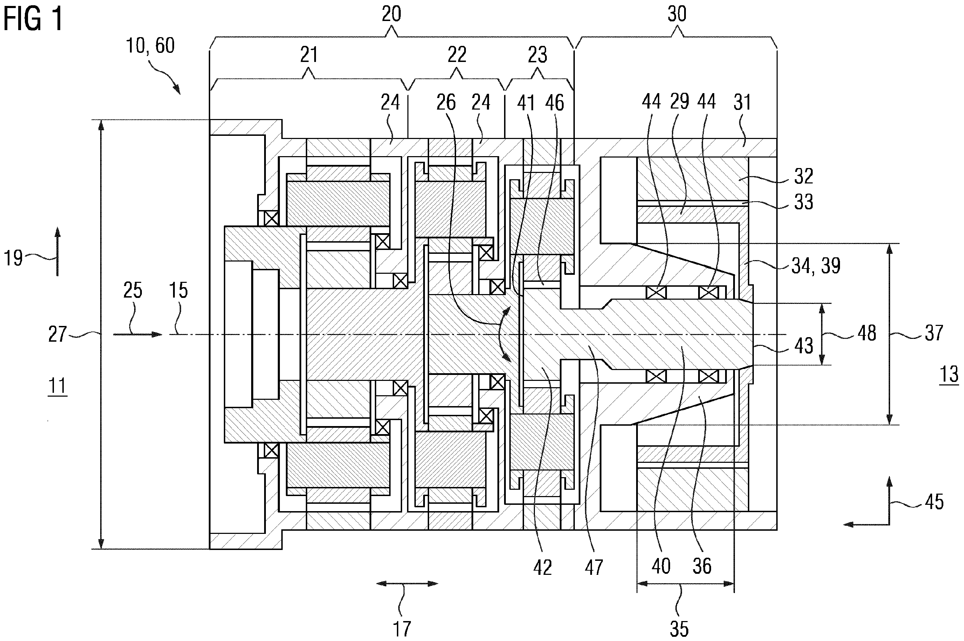

In FIG 1 ist schematisch eine Ausführungsform des beanspruchten Generatorgetriebes 10 dargestellt, das eine Getriebeeinheit 20 und eine Generatoreinheit 30 aufweist. Die Getriebeeinheit 20 umfasst eine erste, zweite und dritte Planetenstufe 21, 22, 23, die hintereinandergeschaltet angeordnet sind. Eine Antriebsleistung 25, die der ersten Planetenstufe 21 von einer Getriebeseite 11 her zugeführt wird, wird unter Wandlung der vorliegenden Drehzahl und des Drehmoments an die zweite Planetenstufe 22 weitergeleitet, und von dort analog an die dritte Planetenstufe 23 weitergeleitet. Die Antriebsleistung 25 wird zwischen der ersten, zweiten und dritten Planetenstufe 21, 22, 23 folglich unverzweigt zur Generatoreinheit 30 transportiert. Die dritte Planetenstufe 23 umfasst ein drehbares Sonnenrad 42, über das die Antriebsleistung 25 an die Generatoreinheit 30 übertragbar ist. Das drehbare Sonnenrad 42 ist an einem getriebeseitigen Ende 41 einer Sonnenwelle 40 angeordnet und mit der Sonnenwelle 40 einstückig ausgebildet. Das Sonnenrad 42 in der dritten Planetenstufe 40 ist um eine Hauptdrehachse 15 des Generatorgetriebes 10 drehbar und ist in einem Abschnitt, der einer Generatorseite 13 des Generatorgetriebes 10 zugewandt ist, in zwei Lagern 44 aufgenommen. Zwischen dem Sonnenrad 42 der Sonnenwelle 40 und dem getriebeseitigen Lager 44 weist die Sonnenwelle 40 einen getriebeseitigen Abschnitt mit einer minimalen Biegesteifigkeit 47 auf. Die minimale Biegesteifigkeit 47 wird durch einen minimalen Außendurchmesser 48 der Sonnenwelle 40 in diesem Abschnitt erzielt. Die Lager 44, in denen die Sonnenwelle 40 in einem generatorseitigen Abschnitt aufgenommen ist, sind wiederum in einem verjüngten Gehäuseabschnitt 36 aufgenommen, der zu einem Generatorgehäuse 31 gehört. Der verjüngte Gehäuseabschnitt 36 ist mit einer radial äußeren Wandung des Generatorgehäuses 32 verbunden und bilden, um die Hauptdrehachse 15 des Generatorgetriebes 10 herum, eine im Wesentlichen U-förmige oder J-förmige rotationssymmetrische Gestalt. Der Begriff radial im Sinne von FIG 1 ist darin als Radialrichtung 19 versinnbildlicht. Der verjüngte Gehäuseabschnitt 36 weist einen Außendurchmesser 37 auf, der geringer ist als ein Innendurchmesser eines Rotors 34. Ferner ist in der Generatoreinheit 30 ein Stator 32 befestigt, der umlaufend ausgebildet ist und mit einem Rotor 34 zusammenwirkt. Der Rotor 34 weist eine Rotorscheibe 39 auf und ist im Wesentlichen becherförmig ausgebildet. Infolgedessen ist das Innere des Generatorgehäuses 31 entlang einer Axialrichtung 17 weitestgehend für einen Luftspalt 33 nutzbar. Dem Stator 32 gegenüberliegend sind am Rotor 34 umlaufend Rotorblechpakete 29 angeordnet. Durch die axialen Abmessungen des Rotors 34 und des Stators 32 wird so eine Luftspaltlänge 35 der Generatoreinheit 30 definiert. Die Lager 44 sind entlang der Axialrichtung 17 im verjüngten Gehäuseabschnitt 36 zueinander beabstandet angeordnet. Dadurch sind die Lager 44 im verjüngten Gehäuseabschnitt 36 dazu ausgebildet, die Sonnenwelle 40 im Wesentlichen vollständig zu lagern. Radiale Kräfte auf die Sonnenwelle 40 rufen korrespondierende Lagerreaktionskräfte 45 in den Lagern 44 hervor. Dadurch wird ein generatorseitiges Ende 43 der Sonnenwelle 40 im Wesentlichen koaxial mit der Hauptdrehachse 15 des Generatorgetriebes 10 zentriert.

Am generatorseitigen Ende 43 der Sonnenwelle 40 ist unmittelbar der Rotor 34 der Generatoreinheit 30 angeordnet. Dementsprechend wird durch die Lager 44 im verjüngten Gehäuseabschnitt 36 die Sonnenwelle 40, und damit der Rotor 34, präzise und zuverlässig koaxial mit der Hauptdrehachse 15 zentriert. Dies wiederum erlaubt es, den Luftspalt 33 zwischen dem Stator 32 und dem Rotor 34 exakt einzustellen, was wiederum einen effizienten Betrieb des Generatorgetriebes 10 ermöglicht. Die Sonnenwelle 40 ist bei der Montage der Generatoreinheit 40 einfach zugänglich und somit ohne Weiteres präzise einstellbar. Insbesondere ist die Sonnenwelle 40 bei einem Verbinden der Generatoreinheit 30 mit der Getriebeeinheit 20 verbindbar, indem eine Sonnenradverzahnung 46 in die dritte Planetenstufe 23 eingeführt wird. Radial Kräfte an der Sonnenradverzahnung 46, die zu einer Biegebeanspruchung 26 der Sonnenwelle 40 führen, werden im Wesentlichen durch den Bereich mit der minimalen Biegesteifigkeit 49 aufgenommen. Der Abschnitt mit der minimalen Biegesteifigkeit 49 dient bei der Sonnenwelle 40 funktional als Gelenk, und damit als Ausgleichsvorrichtung. Derartige Beanspruchungen der Sonnenwelle 40 sind durch entsprechende Auslegung mit erhöhter Lebensdauer zuverlässig auslegbar. Dementsprechend wird durch die Sonnenwelle 40 und ihre Lager 44 im verjüngten Gehäuseabschnitt 36 die Anzahl an Bauteilen im beanspruchten Generatorgetriebe 10 reduziert, dessen Montage beschleunigt und eine präzise Einstellung des Luftspalts 33 in der Generatoreinheit 30 gewährleistet. Der Aufbau des Generatorgetriebes 10 nach FIG 1 ist in einem Computerprogrammprodukt 60 abgebildet, durch das das Betriebsverhalten der Sonnenwelle 40 des Generatorgetriebes 10 simulierbar ist.

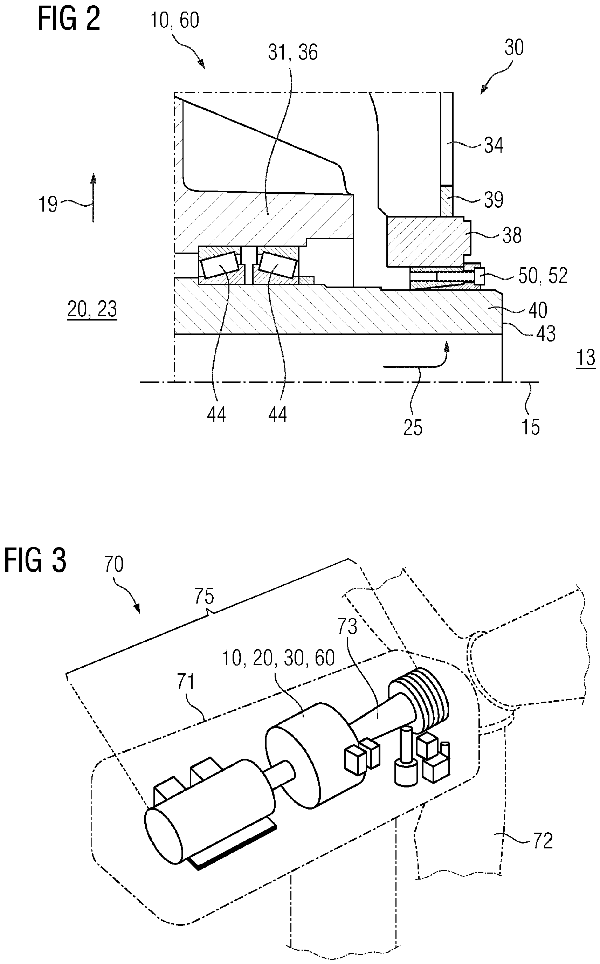

In FIG 2 ist eine Detailansicht der Ausführungsform des Generatorgetriebes 10 nach FIG 1 in einem Längsschnitt gezeigt. Insbesondere zeigt FIG 2 die Sonnenwelle 40 im Bereich ihres generatorseitigen Endes 43, die im Betrieb um die Hauptdrehachse 15 des Generatorgetriebes 10 rotiert. Dabei wird eine von einer dritten Planetenstufe 23 der Getriebeeinheit 20 eine Antriebsleistung 25 auf die Sonnenwelle 40 übertragen. Die Sonnenwelle 40 ist in Lagern 44 aufgenommen, die als Wälzlager ausgebildet sind und in X-Anordnung angeordnet sind. Die Lager 44 wiederum sind in einem verjüngten Gehäuseabschnitt 36 eines Generatorgehäuses 31 angeordnet. Die Sonnenwelle 40 ragt mit ihrem generatorseitigen Ende 43 aus dem verjüngten Gehäuseabschnitt 36 heraus und ist durch ein Spannmittel 50 unmittelbar mit einer Rotornabe 38 verbunden. An die Rotornabe 38 schließt sich in Radialrichtung 19 eine Rotorscheibe 39 an. Die Rotornabe 38 und die Rotorscheibe 39 sind demontierbar ausgebildet. Dadurch wird eine weitere Demontage der Lager 44 und/oder der Sonnenwelle 40 vereinfacht. Das Spannmittel 50 ist als ein Spannsatz 52 ausgebildet, der, bezogen auf die Hauptdrehachse 15, eine Zentrierung der Rotornabe 38 auf der Sonnenwelle 40 erlaubt. Der Spannsatz 52 ist von einer Generatorseite 13 her zugänglich, wodurch dessen Montage vereinfacht wird. Die Rotornabe 38 gehört zum Rotor 34 der Generatoreinheit 30 und kann mit dem Rotor 34 einstückig ausgebildet sein. Durch das Spannmittel 50 folgt eine Bewegung der Rotornabe 38, und damit des Rotors 34, unmittelbar einer Bewegung der Sonnenwelle 40, insbesondere deren Drehbewegung um die Hauptdrehachse 15. Das Betriebsverhalten der Sonnenwelle 40 des Generatorgetriebes 10 nach FIG 2 ist ferner durch ein nicht näher gezeigtes Computerprogrammprodukt 60 simulierbar, in dem der Aufbau nach FIG 2 abgebildet ist.

FIG 3 zeigt schematisch den Aufbau einer Ausführungsform der beanspruchten Windkraftanlage 70. Die Windkraftanlage 70 umfasst eine Gondel 71, an der drehbar ein Mehrblattrotor 72 angeordnet ist. Der Mehrblattrotor 72 ist über eine Hauptwelle 73 drehmomentübertragend mit einem Generatorgetriebe 10 verbunden, das eine Getriebeeinheit 20 und eine Generatoreinheit 30 umfasst. Das Generatorgetriebe 10 ist gemäß einer der oben skizzierten Ausführungsformen ausgebildet.

## Patentansprüche

1. Generatorgetriebe (10), umfassend eine Generatoreinheit (30) und eine Getriebeeinheit (20), die eine Planetenstufe (21,22,23) mit einer Sonnenwelle (40) aufweist, die mit einem Rotor (34) der Generatoreinheit (30) verbunden ist, **da** - **durch gekennzeichnet**, dass die Sonnenwelle (40) unmittelbar mit dem Rotor (34) verbunden ist.

2. Generatorgetriebe (10) nach Anspruch 1, **dadurch gekennzeichnet, dass** der Rotor (34) eine Rotorscheibe (39) umfasst, an der Rotorblechpakete (29) befestigt sind.

3. Generatorgetriebe (10) nach Anspruch 1 oder 2, **da** - **durch gekennzeichnet**, dass die Sonnenwelle (40) in einem generatorseitigen Abschnitt in Lagern (44) drehbar gelagert sind, die in einem generatorseitige Gehäuseabschnitt (36) aufgenommen sind.

4. Generatorgetriebe (10) nach Anspruch 3, **dadurch gekennzeichnet, dass** das der generatorseitige Gehäuseabschnitt (36) als verjüngter Gehäuseabschnitt (36) ausgebildet ist.

5. Generatorgetriebe (10) nach Anspruch 3 oder 4, **da** - **durch gekennzeichnet**, dass der generatorseitige Gehäuseabschnitt (36) zu einem Aufnehmen von Reaktionskräften (45) ausgebildet ist, die durch einen Versatz der Sonnenwelle (40) in der Planetenstufe (21,22,23) hervorgerufen werden.

6. Generatorgetriebe (10) nach einem der Ansprüche 1 bis 5, **dadurch gekennzeichnet, dass** die Sonnenwelle (40) in einem getriebeseitigen Abschnitt ihre minimale Biegesteifigkeit (49) aufweist.

7. Generatorgetriebe (10) nach einem der Ansprüche 3 bis 6, **dadurch gekennzeichnet, dass** der Rotor (34) vollständig in den Lagern (44) im generatorseitigen Gehäuseabschnitt (36) gelagert ist.

8. Generatorgetriebe (10) nach einem der Ansprüche 3 bis 7, **dadurch gekennzeichnet, dass** die Lager (44) zum Aufnehmen einer Biegebeanspruchung (26) der Sonnenwelle (40) zueinander beabstandet angeordnet sind.

9. Generatorgetriebe (10) nach einem der Ansprüche 3 bis 8, **dadurch gekennzeichnet, dass** die Lager (44) als Wälzlager oder als Gleitlager ausgebildet sind.

10. Generatorgetriebe (10) nach einem der Ansprüche 1 bis 9, **dadurch gekennzeichnet, dass** die Sonnenwelle (40) über eine Kurzverzahnung drehfest mit einem Sonnenrad (42) der Planetenstufe (21,22,23) verbunden ist oder einstückig mit dem Sonnenrad (42) ausgebildet ist.

11. Generatorgetriebe (10) nach einem der Ansprüche 1 bis 10, **dadurch gekennzeichnet, dass** die Getriebeeinheit (20) drei hintereinandergeschaltete Planetenstufen (21,22,23) aufweist.

12. Generatorgetriebe (10) nach einem der Ansprüche 1 bis 11, **dadurch gekennzeichnet, dass** der Rotor (32) mittels eines Spannsatzes (52) mit der Sonnenwelle (40) verbunden ist.

13. Antriebsstrang (75) für eine Windkraftanlage (70), umfassend eine Hauptwelle (73), die drehmomentübertragend mit einem Mehrblattrotor (72) der Windkraftanlage (70) verbindbar ist, und drehmomentübertragend mit einem Generatorgetriebe (10) verbunden ist, **dadurch gekennzeich** - **net**, dass das Generatorgetriebe (10) nach einem der Ansprüche 1 bis 12 ausgebildet ist.

14. Windkraftanlage (70), umfassend eine Gondel (71), an der drehbar ein Mehrblattrotor (72) angeordnet ist, der drehmomentübertragend mit einer Hauptwelle (73) eines Antriebsstrangs (75) verbunden ist, **dadurch gekenn** - **zeichnet**, dass der Antriebsstrang (75) nach Anspruch 13 ausgebildet ist.

15. Computerprogrammprodukt (60) zum Simulieren eines Betriebsverhaltens einer Sonnenwelle (40), die in einem Generatorgetriebe (10) angeordnet ist, **dadurch ge** - **kennzeichnet**, dass das Generatorgetriebe (10) nach einem der Ansprüche 1 bis 12 ausgebildet ist.
